Europäisches Patentamt

European Patent Office

Office européen des brevets

(19)

(11) Numéro de publication : **0 305 254 B1**

(12)

# FASCICULE DE BREVET EUROPEEN

(45) Date de publication du fascicule du brevet :
**18.12.91 Bulletin 91/51**

(51) Int. Cl.⁵ : **F16F 1/36, F16B 5/06**

(21) Numéro de dépôt : **88402016.5**

(22) Date de dépôt : **03.08.88**

(54) **Système d'amortissement et de fixation d'un dispositif sur un support.**

(30) Priorité : **07.08.87 FR 8711305**

(43) Date de publication de la demande :
**01.03.89 Bulletin 89/09**

(45) Mention de la délivrance du brevet :
**18.12.91 Bulletin 91/51**

(84) Etats contractants désignés :
**AT DE ES FR GB IT SE**

(56) Documents cités :
**FR-A- 2 489 900**
**FR-A- 2 519 745**
**FR-A- 2 576 370**
**GB-A- 1 517 823**
**GB-A- 2 125 878**
**US-A- 1 951 013**
**US-A- 2 560 212**
**US-A- 2 951 674**
**US-A- 3 893 208**

(73) Titulaire : **SOCIETE D'ELECTROMENAGER DU NORD SELNOR**
**Avenue des Sports**
**F-59810 Lesquin (FR)**

(72) Inventeur : **Rossi, Camille**
**Thomson-CSF SCPI-19, avenue de Messine**
**F-75008 Paris (FR)**
Inventeur : **Coget, Jean-Luc**
**Thomson-CSF SCPI-19, avenue de Messine**
**F-75008 Paris (FR)**

(74) Mandataire : **Phan, Chi Quy et al**
**THOMSON-CSF SCPI**
**F-92045 PARIS LA DEFENSE CEDEX 67 (FR)**

Jouve, 18, rue Saint-Denis, 75001 PARIS

## Description

La présente invention concerne un système d'amortissement et de fixation d'un dispositif sur un support.

Un appareil par exemple un appareil électroménager, sous forme d'un réfrigérateur, d'un congélateur, d'un lave-linge, etc. comprend habituellement un dispositif tel qu'un bloc moteur compresseur, un bloc moteur d'entraînement qui, pour un bon fonctionnement, exige une bonne fixation sur un support et un bon amortissement mécanique en vue d'éviter des vibrations sonores gênantes ou désagréables. Une bonne fixation sur un support et un bon amortissement sont également exigés dans un transport de ce dispositif.

Ce dispositif comprend souvent des pattes plates ou languettes saillantes, à surfaces parallèles et munies de trous de fixation permettant de l'immobiliser d'une manière connue sur un support qui est habituellement une traverse plate, à surfaces parallèles et à trous de montage, au moyen d'un système de fixation connu à vis et écrou. Pour obtenir un amortissement des vibrations de ce dispositif engendrées par son fonctionnement, sont souvent utilisés des silentblocs constitués par des pastilles en une matière élastique, pourvues dans leur centre, d'un trou de passage pour une vis de fixation et dans leur épaisseur une rainure périphérique circulaire destinée à recevoir une bordure d'un trou de fixation d'une patte de ce dispositif. Cette solution connue de fixation se révèle relativement onéreuse par suite du prix de revient de fabrication de ces trois éléments à savoir le silent-bloc, la vis et l'écrou, et se révèle désavantageuse dans sa mise en oeuvre car une insertion d'un silentbloc dans un trou d'une patte de fixation de ce dispositif et un vissage de l'écrou sur la vis du système de fixation sont relativement longs.

Dans le document FR-A-2489900 est décrit un dispositif d'amortissement de vibrations et de fixation d'une patte plate d'un compresseur de réfrigérateur à une plaque de fond de ce réfrigérateur. Ce dispositif réalisé en une seule pièce en matière plastique comprend deux parties tubulaires fixation axialement alignées, opposées dos à dos, maintenues par des membranes ou pièces en U élastiques de liaison, avec un espace libre axial de séparation entre leurs extrémités centrales adjacentes qui constituent des languettes ou pièces d'amortissement. Ces parties opposées tubulaires axialement alignées portent à proximité de leurs extrémités centrales une large tête plate ou en forme d'une ventouse et à une distance prédéterminée de cette tête, des griffes ou ergots élastiques d'ancrage. Ce dispositif est inséré entre cette patte de compresseur et cette plaque de fond du réfrigérateur, avec ses deux parties opposées tubulaires axialement alignées montées respectivement à travers un trou de cette patte plate et un trou de cette plaque de fond du réfrigérateur lesquelles sont bloquées respectivement entre la large tête et les grilles élastiques d'ancrage portées par chacune de ces parties tubulaires.

Ce dispositif d'amortissement de vibrations et de fixation amortit correctement des vibrations et oscillations du compresseur dans le sens axial de ses parties opposées tubulaires mais se révèle dans sa structure en deux parties opposées tubulaires maintenues axialement alignées avec un espace libre axial de séparation entre leurs extrémités centrales par des membranes en U élastiques, insuffisamment rigide pour maintenir de manière stable le compresseur contre des oscillations transversales et solide pour résister à l'action répétée du cisaillement.

La présente invention ayant pour but d'éviter ces inconvénients, permet de réaliser un système efficace et économique d'amortissement et de fixation d'un dispositif sur un support dont les éléments sont faciles à fabriquer et rapides à assembler.

Selon l'invention, un système d'amortissement et de fixation d'un dispositif à pattes munies de trous de fixation à bordure à surfaces parallèles perpendiculaires à leur axe, sur un support muni de trous de montage à bordure à surfaces parallèles perpendiculaires à leur axe, est caractérisé en ce qu'il comprend deux éléments, d'une part un élément de maintien ayant une tête à bord radialement saillant, et un corps cylindrique prolongeant cette tête, monté à travers deux trous alignés, celui de montage du support et celui de fixation d'une patte et muni au moins dans sa paroi latérale, à proximité de son extrémité libre, de deux ergots élastiques de fixation diamétralement opposés, saillants vers l'extérieur, à une distance prédéterminée de cette tête permettant de s'accrocher à la bordure du trou de fixation et de maintenir cette patte sur ce support, et d'autre part un élément élastique de calage formant une couronne et monté concentriquement sur cet élément de martien, entre le support et la patte pour assurer un amortissement des vibrations et oscillations.

Pour mieux faire comprendre l'invention on en décrit ci-après un exemple de réalisation illustré par des dessins ci-annexés dont

— la figure 1 représente une vue partielle et schématique d'un bloc moteur compresseur fixé sur une traverse d'une armature d'un réfrigérateur, montrant une patte de ce bloc moteur-compresseur maintenue sur cette traverse par un système d'amortissement et de fixation réalisé selon l'invention ;

— la figure 2 représente une vue schématique en perspective d'un élément de maintien à ergots élastiques d'accrochage du système d'amortissement et de fixation de la figure 1, et

— la figure 3 représente une vue schématique en perspective d'un élément élastique de calage du système d'amortissement et de fixation de la figure 1.

la présente invention est applicable à un amortissement et une fixation sur un support muni de trou de montage à bordure à surfaces parallèles, de tout dispositif muni de pattes à trous de fixation à bordure à surfaces parallèles.

Pour simplifier l'exposé de l'invention, est seule décrite ci-après une application à un amortissement et une fixation d'un bloc moteur-compresseur sur une traverse d'une armature d'un réfrigérateur ou d'un moyen de transport de ce bloc moteur-compresseur.

Dans un réfrigérateur par exemple, un bloc moteur-compresseur 1 est monté sur un support 2 constitué par une traverse d'une armature d'un compartiment appelé compartiment de machine où sont rassemblés les principaux organes de production de froid de ce réfrigérateur. Ce support 2 est muni de trous de montage 20 à bordure à surfaces parallèles. Le bloc moteur-compresseur 1 comprend plusieurs pattes 3 munies chacune d'un trou de fixation 4 à bordure à surfaces parallèles. Pour obtenir un bon fonctionnement silencieux, le bloc moteur-compresseur 1 est à la fois élastiquement suspendu et fermement fixé sur cette traverse 2 par un système d'amortissement et de fixation 6.

Selon une caractéristique importante, un système d'amortissement et de fixation 6 comprend deux éléments, un élément de maintien 7 à ergots élastiques d'accrochage et un élément élastique de calage 8 formant couronne et monté concentriquement sur cet élément de maintien 7.

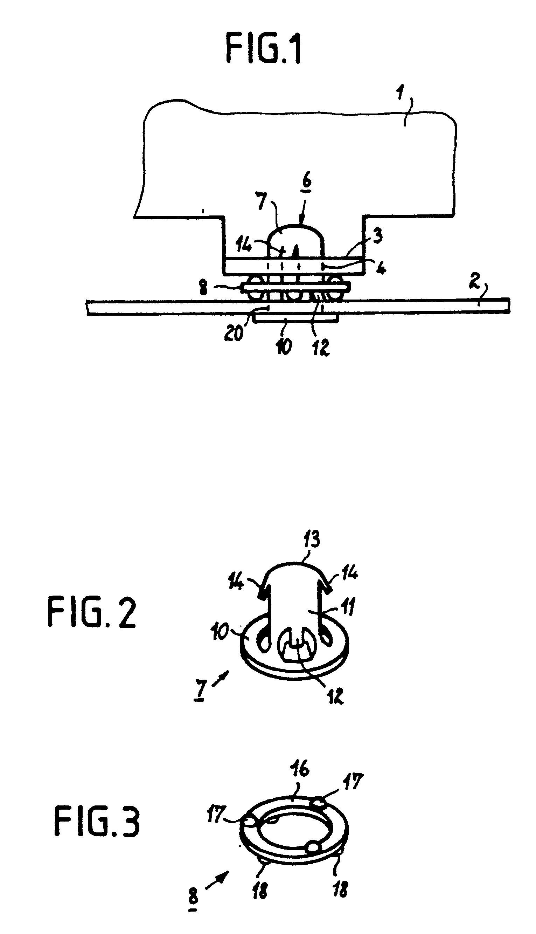

Dans l'exemple illustré aux figures 1 à 3, l'élément de maintien 7 comprend une tête à bord radialement saillante 10 et un corps cylindrique 11 qui prolonge axialement cette tête 10 et qui est muni au moins dans sa paroi latérale d'une part à proximité de la tête, à une distance prédéterminée de celle-ci, de deux ergots élastiques de retenue diamétralement opposés, saillants vers l'extérieur 12, et d'autre part à proximité de son extrémité libre arrondie 13, à une distance prédéterminée de la tête 10, de deux ergots élastiques de retenue diamétralement opposés, saillants vers l'extérieur 14.

Sur le corps 11 de l'élément de maintien 7, les ergots élastiques de retenue 12 et les ergots élastiques de fixation 14 peuvent être soit en alignement longitudinal (non représenté) soit en décalage, les premiers vis-à-vis des deuxièmes, d'un angle de 90° (figure 2).

L'élément élastique de calage 8 comprend un corps 16 ayant la forme d'une couronne à diamètre intérieur au moins égal au diamètre du corps cylindrique 11 de l'élément de maintien 7, et pourvu sur ses deux faces de bossages 17 et 18 régulièrement espacés, angulairement.

Lors d'une fixation du bloc moteur-compresseur, l'élément de maintien 7 est, d'abord par son corps 11, monté de bas en haut à travers un trou de montage 20 du support ou traverse 2 jusqu'à ce que sa tête 10 soit appliquée contre ce support 2 et les ergots élastiques de retenue rétractés en franchissant ce trou 20, reviennent à leurs positions saillantes initiales, s'accrochent au bord de ce trou 20, et mettent l'élément de maintien 7 en position stable de montage puis l'élément élastique de calage 8 et une patte 3 du bloc moteur-compresseur 1 sont successivement enfilés sur le corps 11 de cet élément de maintien 7 et pressés contre le support ou traverse 2 jusqu'à ce que les ergots élastiques de fixation 14 qui sont rétractés en franchissant le trou de fixation 4 de la patte 3, reviennent à leurs positions saillantes initiales, s'accrochent au bord de ce trou 4 et retiennent fermement et élastiquement cette patte 3 sur le support ou traverse 2. L'élément élastique de calage 8 est ainsi inséré entre cette patte 3 du bloc moteur-compresseur et le support ou traverse 2. Les vibrations et oscillations mécaniques du bloc moteur-compresseur 1 ne sont pas de ce fait directement transmises au support ou traverse 2. Elles sont efficacement amorties par l'élément élastique de calage 8, ce qui évite toute génération de bruit gênant ou désagréable.

Lors d'un démontage de ce bloc moteur-compresseur 1, les ergots de fixation 14 sont élastiquement escamotés dans le corps 11 de l'élément de maintien 7 et la patte 3 de ce bloc moteur-compresseur est alors rendue libre et peut être dégagée de l'élément de maintien 7.

Pour obtenir une bonne fixation du bloc moteur-compresseur sur le support 2 dans l'élément de maintien 7, les ergots élastiques 12 saillants de retenue se trouvant à proximité de la tête 10 sont formés de manière à avoir leurs extrémités libres situées à une distance prédéterminée de cette tête 10, égale à l'épaisseur de la bordure à surfaces parallèles des trous de montage 20 de ce support 2, et les ergots élastiques saillants de fixation 14 se trouvant à proximité de l'extrémité libre arrondie 13 sont formés de manière à avoir leurs extrémités libres situées à une distance prédéterminée de la tête 10, égale à la somme de l'épaisseur de l'élément élastique de calage 8, de celle de la bordure à surfaces parallèles des trous de fixation 4 des pattes 3 d'un bloc moteur-compresseur 1 et de celle de la bordure à surfaces parallèles des trous de montage du support.

Dans l'exemple illustré, l'élément de maintien 7 comprend des ergots élastiques de retenue 12 qui s'accrochent au support ou traverse 2 et assurent sa propre immobilisation, et des ergots élastiques de fixation 14 qui s'accrochent à la patte 3 du bloc moteur-compresseur 1 et assurent un blocage en place de ce dernier.

Une mise en place de l'élément de maintien 7 et une fixation de la patte 3 du bloc moteur-compresseur 1 se font ainsi par simple accrochage par des ergots élastiques autrement dit par clippage, ce qui réduit fortement le temps de montage et facilite toute mécanisation ou automatisation éventuelle des opérations de fixation d'un bloc moteur-compresseur 1 sur une traverse ou support 2 par un tel système d'amortissement et de fixation 6.

Dans une variante de réalisation non illustrée, l'élément de maintien 7 comprend seulement des ergots élastiques de fixation 14, à proximité de son extrémité libre arrondie 13. Les ergots élastiques de retenue 12 sont supprimés. Cette variante de réalisation assure une bonne fixation élastique de la patte 3 du bloc moteur-compresseur 1 sur le support 2, mais ne donne pas à l'élément de maintien 7 un moyen propre qui le met en position stable de montage sur ce support ou traverse 2.

Le système d'amortissement et de fixation 6 est de préférence réalisé en une matière synthétique telle qu'un polyamide connu sous un nom commercial de Nylon.

Le coût de fabrication du système d'amortissement et de fixation 6, composé d'un élément de maintien 7 et d'un élément élastique de calage 8, peut descendre jusqu'à 40% inférieur au coût de fabrication d'un système connu de fixation à vis, écrou et silent-bloc rappelé dans un paragraphe précédent.

Et, une grande facilité et rapidité de fixation d'un dispositif sur un support et de son démontage, peuvent être ainsi obtenue grâce à ce système d'amortissement et de fixation 6.

## Revendications

1. Système d'amortissement et de fixation d'un dispositif (1) à pattes (3) munies de trous de fixation (4) à bordure à surfaces parallèles perpendiculaires à leur axe, sur un support (2) muni de trous de montage (20) à bordure à surfaces parallèles perpendiculaires à leur axe, caractérisé en ce qu'il comprend deux éléments, d'une part un élément de maintien (7) ayant une tête (10) à bord radialement saillant, et un corps cylindrique (11) prolongeant cette tête (10) monté à travers deux trous alignés, celui de montage (20) du support (2) et celui de fixation (4) d'une patte (3) et muni au moins dans sa paroi latérale, à proximité de son extrémité libre (13), de deux ergots élastiques de fixation (14) diamétralement opposés, saillants vers l'extérieur, à une distance prédéterminée de cette tête (10) permettant de s'accrocher à la bordure du trou de fixation (4) et de maintenir cette patte (3) sur ce support (2), et d'autre part un élément élastique de calage (8) formant une couronne et monté concentriquement sur cet élément de maintien (7), entre le support (2) et la patte (3) pour assurer un amortissement des vibrations et oscillations.

2. Système selon la revendication 1, caractérisé en ce que le corps cylindrique (11) prolongeant la tête (10) de l'élément de maintien (7) est muni en plus des ergots élastiques de fixation (14) dans sa paroi latérale à proximité de cette tête (10), de deux ergots élastiques de retenue (12) qui s'accrochent à la bordure du trou de montage (20) pour immobiliser cet élément de maintien (7) sur le support (2).

3. Système selon la revendication 1, caractérisé en ce que l'élément élastique de calage (8) comprend un corps (16) ayant la forme d'une couronne à diamètre intérieur au moins égal au diamètre du corps cylindrique (11) de l'élément de maintien (7) et pourvue sur ses deux faces, de bossages (17, 18) régulièrement espacés angulairement.

4. Système selon la revendication 2, caractérisé en ce que dans l'élément de maintien (7) sur le corps (11), les ergots élastiques de retenue (12) sont angulairement décalés vis-à-vis des ergots élastiques de fixation (14) d'un angle de 90°.

5. Système selon la revendication 2, caractérisé en ce que dans l'élément de maintien (7), sur le corps (11), les ergots élastiques de retenue (12) sont longitudinalement alignés avec les ergots élastiques de fixation (14).

6. Système selon la revendication 2, caractérisé en ce que les ergots élastiques de retenue (12), à proximité de la tête (10) de l'élément de maintien (7), sont pourvus d'extrémités libres situées à une distance prédéterminée de cette tête (10) égale à l'épaisseur de la bordure à surfaces parallèles des trous de montage (20) du support (2) et les ergots élastiques de fixation (14) à proximité de l'extrémité arrondie (13) de l'élément de maintien (7), sont pourvus d'extrémités libres situées à une distance prédéterminée de cette tête (10) égale à la somme des épaisseurs de l'élément élastique de calage (8), de la bordure à surfaces parallèles des trous de fixation (4) des pattes (3) du dispositif (1) à fixer et de la bordure à surfaces parallèles des trous de montage du support.

7. Système selon l'une des revendications 1 à 6, caractérisé en ce qu'il est réalisé en une matière synthétique telle qu'un polyamide connu sous un nom commercial de Nylon.

## Patentansprüche

1. System zur Dämpfung und Befestigung einer Vorrichtung (1) über Laschen (3) mit Befestigungslöchern (4), deren Ränder parallele, zur Lochachse senkrechte Oberflächen besitzen, wobei die Befestigung an einem Träger (2) mit Montagelöchern (20) erfolgen soll, deren Ränder zur Lochachse parallele Oberflächen besitzen, dadurch gekennzeichnet, daß das System zwei Elemente aufweist, nämlich einerseits ein Halteelement (7), das einen Kopf (10) mit radial vorspringendem Rand und einen den Kopf (10) verlängernden zylindrischen Körper (11) aufweist und durch zwei fluchtende Löcher montiert wird, nämlich das Montageloch (20) des Trägers (2) und das Befestigungsloch (4) einer Lasche (3), wobei das Halteelement mindestens an seiner Seitenwand in der Nähe seines freien Endes (13) zwei nach außen vorspringende und diametral gegenüberliegende elastische Befestigungshaken (14) in einem vorgegebenen Abstand vom Kopf (10) aufweist, die sich am Rand des Befestigungslochs (4) verhaken und die Lasche (3) am Träger (2) festhalten können, und andererseits ein elastisches Unterlegelement (8), das einen Ring bildet und konzentrisch auf dem Halteelement (7) zwischen dem Träger (2) und der Lasche (3) montiert ist, um eine Dämpfung der Schwingungen und Oszillationen zu bewirken.

2. System nach Anspruch 1, dadurch gekennzeichnet, daß der zylindrische Körper (11), der den Kopf (10) des Halteelements (7) verlängert, außer den elastischen Befestigungshaken (14) in seiner Seitenwand in der Nähe des Kopfes (10) zwei elastische Haltehaken (12) aufweist, die sich am Rand des Montagelochs (20) verhaken, um das Halteelement (7) auf dem Träger (2) festzulegen.

3. System nach Anspruch 1, dadurch gekennzeichnet, daß das elastische Unterlegelement (8) einen Körper (16) In Form eines Rings mit einem Innendurchmesser mindestens gleich dem Durchmesser des zylindrischen Körpers (11) des Halteelements (7) aufweist und an seinem beiden Selten winkelmäßig gleich verteilte Vorsprünge (17, 18) besitzt.

4. System nach Anspruch 2, dadurch gekennzeichnet, daß die elastischen Haltehaken (12) im Halteelement (7) auf dem Körper (11) gegenüber den elastischen Befestigungshaken (14) um 90° versetzt sind.

5. System nach Anspruch 2, dadurch gekennzeichnet, daß die elastischen Haltehaken (12) Im Halteelement (7) auf dem Körper (11) in Längsrichtung mit den elastischen Befestigungshaken (14) fluchten.

6. System nach Anspruch 2, dadurch gekennzeichnet, daß die elastischen Haltehaken (12) in der Nähe des Kopfes (10) des Halteelements (7) freie Enden besitzen, die in einem vorgegebenen Abstand vom Kopf (10) gleich der Dicke des Randes der Montagelöcher (20) des Trägers (2) angeordnet sind, und daß die elastischen Befestigungshaken (14) in der Nähe des abgerundeten Endes (13) des Halteelements (7) freie Enden besitzen, die einen vorgegebenen Abstand zum Kopf (10) gleich der Summe der Dicken des elastischen Unterlegelements (8), des Randes der Befestigungslöcher (4) der Laschen (3) der zu befestigenden Vorrichtung (1) und des Randes der Montagelöcher des Trägers versehen sind, wobei diese Löcher parallele Oberflächen besitzen.

7. System nach einem der Ansprüche 1 bis 6, dadurch gekennzeichnet, daß es aus einem Kunststoffmaterial wie z.B. einem Polyamid hergestellt ist, das unter dem Handelsnamen Nylon bekannt ist.

## Claims

1. A system for damping and securing a device (1) to a support (2), the device (1) being provided with tabs (3) having securing holes (4) whose edges present parallel surfaces perpendicular to the hole axis, the support (2) being provided with mounting holes (20) whose edges present parallel surfaces perpendicular to the hole axis, characterized in that it comprises two members, namely on the one hand a fastening member (7) having a head (10) whose edge projects radially, and a cylindrical body (11) in the extension of this head (10) and mounted through two aligned holes, namely the mounting hole (20) of the support (2) and the securing hole (4) of a tab (3) and supplied, at least in its lateral wall and close to its free end (13), with two diametrically opposed and outwardly projecting resilient securing hooks (14) at a predetermined distance from the head (10), these hooks allowing to become engaged behind the edge of the securing hole (4) and to fasten said tab (3) to said support (2), and on the other hand a resilient wedge member (8) which is ring-shaped and is coaxially mounted on said fastening member (7) between the support (2) and the tab (3) in order to ensure damping of the vibrations and oscillations.

2. A system according to claim 1, characterized in that the cylindrical body (11) which extends the head (10) of the fastening member (7) is supplied, besides the resilient securing hooks (14) in its lateral wall close to this head (10), with two resilient retaining hooks (12) which become engaged behind the edge of the mounting hole (20) in order to fasten this fastening member (7) to the support (2).

3. A system according to claim 1, characterized in that the resilient wedge member (8) comprises a ring-shaped body (16) whose inner diameter is at least equal to the diameter of the cylindrical body (11) of the fastening member (7) and which is provided on both of its faces with embossings (17, 18) which are angularly distributed in a regular manner.

4. A system according to claim 2, characterized in that, in the fastening member (7) on the body (11), the resilient retaining hooks (12) are angularly shifted with respect to the resilient securing hooks (14) by an angle of 90°.

5. A system according to claim 2, characterized in that in the fastening member (7) on the body (11), the resilient retaining hooks (12) are longitudinally aligned with the resilient securing hooks (14).

6. A system according to claim 2, characterized in that the resilient retaining hooks (12) are provided close to the head (10) of the fastening member (7) with free ends situated at a predetermined distance from this head (10) equal to the thickness of the mounting holes (20) of the support (2), and the resilient securing hooks (14) are provided close to the rounded-up end (13) of the fastening member (7) with free ends situated at a predetermined distance from this head (10) equal to the sum of the thicknesses of the resilient wedge member (8), of the edge of the fastening holes (4), of the tabs (3) of the device (1) to be secured, and of the edge of the support mounting holes.

7. A system according to one of claims 1 to 6, characterized in that it is made of a synthetic material such as a polyamide known under the commercial name Nylon.

# FIG.1

# FIG.2

# FIG.3